(19) **Europäisches Patentamt**
**European Patent Office**
**Office européen des brevets**

(11) **EP 1 747 503 B1**

(12) **EUROPEAN PATENT SPECIFICATION**

(45) Date of publication and mention
of the grant of the patent:
**19.08.2009 Bulletin 2009/34**

(51) Int Cl.:
**G05B 17/02** (2006.01)

(21) Application number: **05731349.6**

(86) International application number:
**PCT/PL2005/000023**

(22) Date of filing: **29.03.2005**

(87) International publication number:
**WO 2005/096109 (13.10.2005 Gazette 2005/41)**

(54) **A METHOD FOR DETERMINING THE COEFFICIENTS OF A MULTIPARAMETER MODEL OF REACTION KINETICS FOR CURING RESIN MIXTURES**

EIN VERFAHREN ZUR ERMITTLUNG DER KOEFFIZIENTEN EINES MULTIPARAMETERMODELLS DER REAKTIONSKINETIK VON HARZ AUSHÄRTUNGSMISCHUNGEN

PROCEDE DE DETERMINATION DES COEFFICIENTS D'UN MODELE A PARAMETRES MULTIPLES DE LA CINETIQUE REACTIONNELLE POUR LA CUISSON DE MELANGES A BASE DE RESINE

(84) Designated Contracting States:
**AT BE BG CH CY CZ DE DK EE ES FI FR GB GR HU IE IS IT LI LT LU MC NL PL PT RO SE SI SK TR**

(30) Priority: **30.03.2004 PL 36671204**

(43) Date of publication of application:
**31.01.2007 Bulletin 2007/05**

(73) Proprietor: **ABB Sp.z.o.o.**
**04-713 Warszawa (PL)**

(72) Inventors:
• **NOWAK, Tomasz**
**30-389 Krakow (PL)**

• **KASZA, Krzysztof**
**30-602 Oswiecim (PL)**
• **SAJ, Piotr**
**31-980 Krakow (PL)**
• **SEKULA, Robert**
**30-613 Krakow (PL)**

(74) Representative: **Chochorowska-Winiarska, Krystyna**
**ABB Sp. z o. o.,**
**Corporate Research,**
**ul. Starowislna 13A**
**31-038 Krakow (PL)**

(56) References cited:
**US-A- 5 453 226        US-A1- 2003 136 479**

**Description**

The subject of the invention is a method for determining the coefficients of a multiparameter model of reaction kinetics for curing resin mixtures, applicable to the determination of the physical and chemical material properties of resin mixtures, used in numerical modelling of the processes of pouring and/or curing of hardenable material components, and especially in bushing curing processes.

A correct modelling of the processes of pouring and/or curing of hardenable material components requires the knowledge of the parameters that determine various complex physical and chemical phenomena accompanying this process or processes. The definition of the effect of individual parameters, for example temperature or the degree of curing, on the physical characteristics of the material subjected to heat treatment, before this treatment is commenced, is a process whose technical realisation is difficult, because all material parameters, both thermal: linear expansion, thermal conductivity, specific heat, density, and mechanical: Young's modulus, Poisson's ratio, tensile strength, etc - depend both on temperature and on the degree of reaction, that is, on so called polymerisation or cross-linking of the curing material. In a situation where temperature and the degree of curing of the resin mixture are strongly associated with one another - the determination of their individual effect on material characteristics is problematic.

Now, DSC (differential scanning calorimetry) examinations are made in order to determine the parameters of the kinetics of the resin mixtures curing reaction. These examinations employ specially prepared samples in the form of very small resin volumes of a few milligrams, which are subjected to heat treatment such as heating up, cooling and/or isothermal soaking. During this treatment flow of heat supplied to or emitted by this sample is measured and DSC-technique computer-processed measurement results are presented in the form of suitable charts. Based on DSC measurements made on samples, the properties of the resin material and the parameters of the reaction kinetics during the curing process can be predicted. A disadvantage of DSC measurements is the necessity to prepare very small samples to prevent the propagation of reaction heat emitted during the process from disrupting the measurements. In cases where the examined material is a paper-and-resin composite, preparation of a few-milligram sample is practically impossible. In addition, preparation of a homogenous mixture for such system is very difficult. So far, there is no known method permitting the determination of the full range of material properties for resin-and-paper mixtures used for the construction of various bushings, which would be based on modelling parameters concerning the reaction kinetics of the curing process.

Patent description US No. 6679626 describes a method for determining the thermal material properties of metal parts. This method consists in creating a model in which at least one thermodynamical parameter is created as a linear combination of at least one basic function which describes the thermal properties of the material, and at least one parameter weighing according to a specific formula. Among the thermal properties of a material that can be described in this way, specific enthalpy, specific heat and thermal conductivity should be mentioned. The weighing parameters are determined by applying a neurone network for which input values are the mass percentages of particular elements in the alloy. The neurone network learns by matching results obtained from calculations to results obtained from experimental measurements. Changes in the values of the neurone network weights cause changes in the values of the weighing parameters of the basic functions. The learning process is carried on until sufficiently good conformity of calculations to measurements is achieved.

An inconvenience of the presented method is the need to conduct a large number of experiments, so that the teaching set for the neurone network is adequately numerous.

From patent description US 5453226 there is known a method for controlling the curing process of a composite material part in curing vessel. The method relies on the comparison of actual part parameter values to predict part parameter values wherein the predicted values are obtained from computer simulation of the cure cycles using convective heat transfer, thermo-chemical, cure-kinetics, resin flow and viscosity models. Optimal cure cycle are continuously selected and updated during the cure process. An extended heat transfer model coupled to the thermo-chemical model accounts for convective heat transfer within curing vessel during the curing process. Described solution is rather general and does not disclosure directly how to determine the coefficients of a multiparameter model of a reaction kinetics for curing resin mixture.

The essence of the inventive method for determining the coefficients of a multiparameter model of reaction kinetics for curing resin mixtures, in which the reaction of resin mixture curing is experimentally initiated and known computer modelling and simulation techniques are used, consists in that in a step one the temperature of the curing reaction occurring during the experiment is measured, the first temperature curve $f(T_{EXP}, t)$ is plotted and then analytically transformed into the first curve of the degree of curing $f(\alpha_{ANAL}, t)$ and a computer simulation for provisionally adopted reaction kinetics model with provisionally assumed coefficients is made. As a result of the computer simulation the second temperature curve $f(T_{SYM}, t)$, which describes changes in the course of the curing reaction occurring over time, and the second curve of the degree of curing $f(\alpha_{SYM}, t)$ are obtained, which are plotted for at least one measuring point $p_i$ adopted in the experiment. Next, the first and the second temperature curves are compared with one another, and if there is a nonconformity in their form a step two is performed, in which the third curve of the degree

of curing $f(\alpha_{EXP},t)$ is plotted. The curve of the degree of curing $f(\alpha_{EXP},t)$ is made in this way: the second curve of the degree of curing $f(\alpha_{SYM},t)$ is compared to the first curve of the degree of curing $f(\alpha_{ANAL},t)$, deviations in their forms are determined and depending on whether the second curve of the degree of curing $f(\alpha_{SYM},t)$ precedes or follows the first curve of the degree of curing $f(\alpha_{ANAL},t)$, the points lying on the second curve $f(\alpha_{SYM},t)$ are moved on the chart by a defined deviation value, which points after the movement form the third curve of the degree of curing $f(\alpha_{EXP},t)$. Then, in a step three, the third curve of the degree of curing $f(\alpha_{EXP},t)$ that has been plotted in this way is analytically transformed and for this curve new coefficients occurring in the adopted model of reaction kinetics are determined, after which for these new coefficients another computer simulation is made as in the step one and another temperature curve $f(T_{SYM},t)$ describing temperature changes in the course of the curing reaction over time is plotted, which is compared with the temperature curve $f(T_{EXP},t)$. Operations from steps two and three are repeated until the assumed conformity between the forms of these functions is achieved, which conformity indicates that the determination of the proper coefficients of the multiparameter model of reaction kinetics for curing resin mixtures has been accomplished. Preferably as the model of reaction kinetics the Kamal's model in the following form is adopted:

$$\frac{d\alpha}{dt} = \left(k_1 + k_2\alpha^m\right)\cdot\left(1-\alpha\right)^n$$
,

$$k_1 = A_1 e^{\frac{E_1}{RT}} ,$$

$$k_2 = A_2 e^{\frac{E_2}{RT}} ,$$

where:

α - degree of resin curing,
dα/dt - increment of degree of curing over time,
m,n - material constants,
$k_1$, $k_2$ - reaction rate constants,
$A_1$, $A_2$ - expotential coefficients [1/s],
$E_1$, $E_2$ - activation energies [J/kg],
R - universal gas constant [J/kgK],
T - absolute temperature [K].

The advantage of the inventive method is the possibility to determine the parameters of the kinetics of non-homogenous mixtures curing, for example, mixtures in the form of a resin composite material with sealed fibres or folded paper, and to gain independence of the size and dimensions of the sample for which curing reaction temperature is measured and recorded, which allows to use the real object as the tested sample. Moreover, the invention reduces the number of conducted experiments, because performance of only one experiment allows to determine the demanded coefficients, which greatly improves the process of determination of these coefficients.

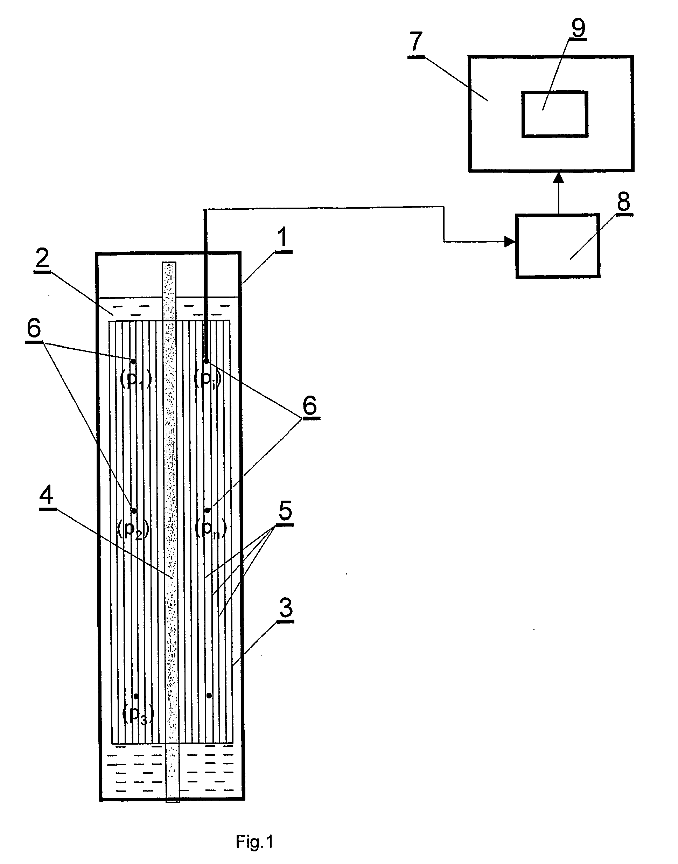

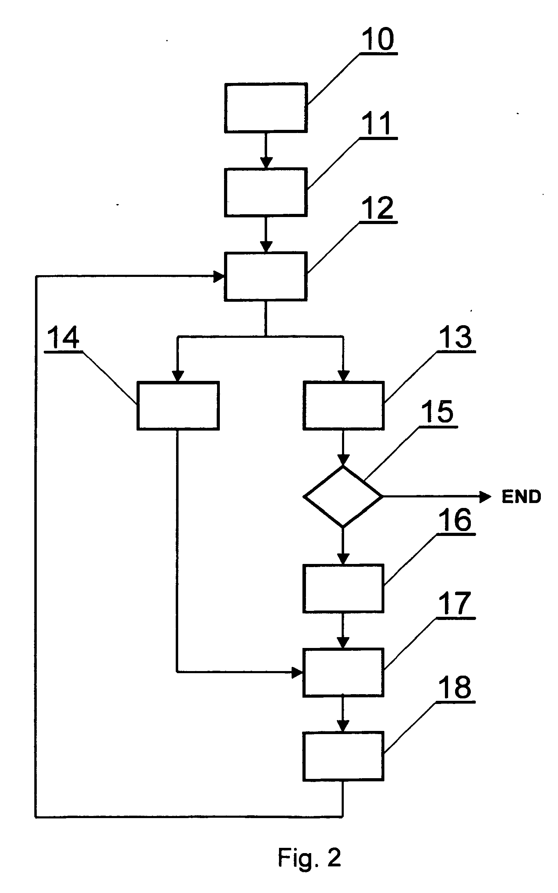

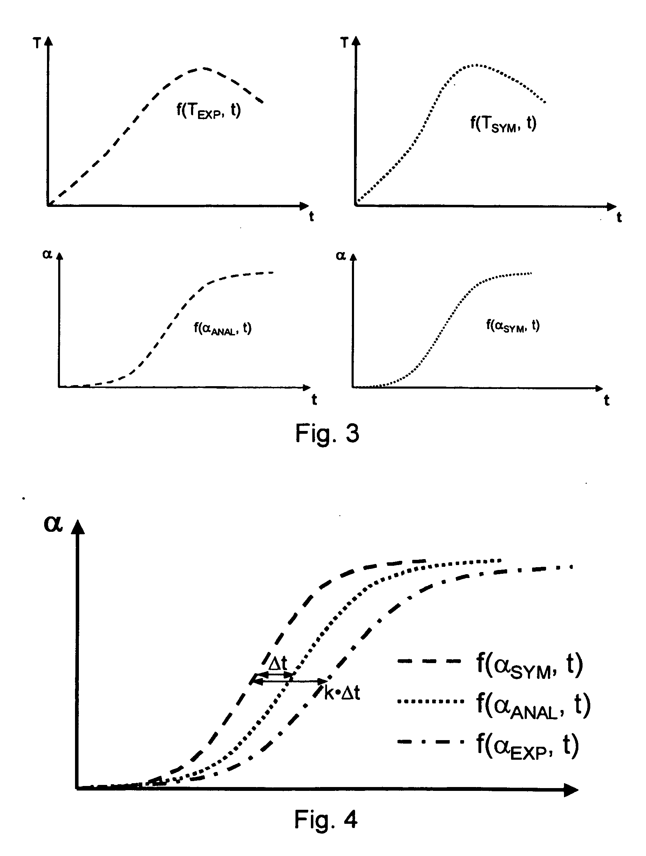

The method for determining the coefficients of a multiparameter model of reaction kinetics for curing resin mixtures is presented as an hypothetical embodiment in the drawing, where fig.1 shows the system for testing and analysing resin mixtures, fig. 2 - a network of operations performed in order to determine the thermal properties of resin mixtures, fig. 3 - a set of charts showing temperature curves and curves of the degree of curing obtained in step one, and fig. 4 - a set of charts showing the curves of the degree of curing obtained in step two.

An embodiment of the invention.

In a mould 1 there has been placed liquid resin 2 and a cylinder-shaped sample 3 immersed in the resin 2, which is made in the form of paper scrolls 5 impregnated with the resin 2 and wound on a bar 4. Between the paper scrolls 5 there are positioned temperature sensors 6 in the form of thermocouples. The temperature sensors are linked to a computer device 7 comprising a screen (not shown in the picture) via a temperature recorder 8. In the computer device 7 there is installed a data processing module 9, making it possible to process measurement data according to an assumed mathematical model describing in a general way the kinetics of the curing reaction, and to present the results of the temperature measurements in the form of charts on the screen of the computer 7.

The inventive method is realised in the following operations in three main steps.

Step one:

In operation 10 the mould 1 together with the resin 2 and the tested sample 3 is subjected to a soaking process at a temperature or temperatures ensuring correctness of the curing process in a specific time period t, during which temperature $T_{EXP}$ of the reaction course process in at least one specific point $p_{1...n}$ of the sample 3 is measured by means of at least one temperature sensor 6. The measured temperature is recorded and presented on the screen of the computer device 7 in the form of a real temperature chart, in the form of function $f(T_{EXP}, t)$, for the selected measuring point or, in case of several measuring points, in the form of charts plotted for these points.

In operation 11 a simulation model describing geometrical, physical and thermal parameters of the process from point 10 is generated. A model of the curing reaction kinetics process is adopted. As this model e.g. the so called Kamal's model is adopted and implemented in the simulator program.

$$\frac{d\alpha}{dt} = \left(k_1 + k_2\alpha^m\right)\cdot\left(1-\alpha\right)^n \ ,$$

$$k_1 = A_1 e^{\frac{E_1}{RT}} \ ,$$

$$k_2 = A_2 e^{\frac{E_2}{RT}} \ ,$$

where:

$\alpha$ - degree of curing of resin,
$d\alpha/dt$ - change in the degree of curing over time,
$m, n$ - material constants,
$k_1, k_2$ - reaction rate constants,
$A_1, A_2$ - expotential coefficients [1/s],
$E_1, E_2$ - activation energies [J/kg],
$R$ - universal gas constant [J/kgK],
$T$ - absolute temperature [K].

Then in operation 12 the initial values of the parameters describing the adopted model of curing reaction kinetics are determined assuming that they correspond to the values that characterise pure resin which is not a mixture of resin and paper:

A1 = 15999263.83,
A2 = 232273.68,
E2 = 9343.6,
E3 = 7215.39,
m = 0.9368,
n = 1.2373.

Simultaneously operations 13 and 14 are performed for the values of the coefficients of the adopted reaction kinetics model determined in operation 12.
In operation 13 a computer simulation of the curing process is made for selected measuring points $p_i$ from operation 10. The simulation is based on the simulation model generated in operation 11 and the coefficient values from operation 12. As its result, a temperature chart $f(T_{SYM},t)$ and a curing degree chart $f(\alpha_{SYM},t)$ are plotted for the selected measuring points as a time function and displayed on the screen of the computer device 7.
In operation 14, for the selected measuring points $p_i$ from operation 10, the same as in operation 13, a chart of the analytical degree of curing as a time function $f(\alpha_{ANAL},t)$ is calculated and plotted. These calculations are based on the real temperature chart $f(T_{EXP},t)$ which has been adopted in operation 11 as the reaction kinetics model, and on the values of the kinetics coefficients adopted in operation 12.
In operation 15 the simulative temperature charts $f(T_{SYM},t)$ are compared with the real temperature chart $f(T_{EXP},t)$. In the comparison process, the similarity between the curves shown on the screen of the computer device 7 is assessed, or the assessment of the similarities between the curves is made by means of an adopted, commonly known mathematical function. If the comparison shows that for the selected measuring points $p_i$ the curves from both charts have a similar form, then the values of the reaction kinetics parameters assumed for the simulation should be considered as reflecting the actual reaction kinetics of the examined system.

Step two:

If those curves are not sufficiently similar, then in operation 16 the direction of their deviation is assessed. The simulative curves $f(T_{SYM},t)$ are either considered to be curves representing reaction kinetics that is too fast or too slow in relation to the real system from operation 10.
Estimation that reaction kinetics is too fast in relation to the real system means that the curve $f(\alpha_{EXP},t)$ should be to the right of the curve $f(\alpha_{SYM},t)$ on the chart displayed on the screen. The curve $f(\alpha_{EXP},t)$ represents a change in the degree of curing in the selected points for the real system from operation 10.
Estimation that reaction kinetics is too slow in relation to the real system means that the curve $f(\alpha_{EXP},t)$ should be to the left of the curve $f(\alpha_{SYM},t)$ on the chart displayed on the screen.
In operation 17 on the basis of information obtained in operations 14 and 16 the form of the curve $f(\alpha_{EXP},t)$ is determined by moving the chart $f(\alpha_{SYM},t)$ by a certain value $k\cdot\Delta t$, where k is bigger than 1, and the value $\Delta t$ is the difference between the times of reaching the same degree of curing on charts $f(\alpha_{ANAL},t)$ from operation 14 and $f(\alpha_{SYM},t)$ from operation 16.

Step three:

In operation 18 new values of the reaction kinetics parameters are calculated, which are determined on the basis of the relations $f(\alpha_{EXP},t)$ and $f(T_{EXP},t)$ and using a selected optimisation procedure. After the determination of the new values of the reaction kinetics parameters operation 12 is repeated. In operation 12 the new values of the parameters are considered to be valid, and then operations 13, 14 and the other ones that follow it are performed. The iterative cycle of the performance of operations 12 -18 is run until the condition of the similarity of the curves $f(T_{EXP},t)$ and $f(T_{SYM},t)$ in operation 15 is fulfilled. When the assumed conformity between the forms of temperature curves $f(T_{EXP},t)$ and $f(T_{SYM},t)$

is obtained, it means that the values of the reaction kinetics coefficients adopted in operation 12 properly describe the resin mixture examined in operation 10.

**Claims**

1. A method for determining the coefficients of a multiparameter model of reaction kinetics for curing resin mixtures, consisting in an experiment in which a reaction of resin mixture curing is created, and using known computer modelling and simulation techniques, **characterised in that** in a step one the temperature of the curing reaction occurring during the experiment is measured, the first temperature curve ($f(T_{EXP},t)$) is plotted which is then analytically transformed into the first curve of the degree of curing ($f(\alpha_{ANAL},t)$) and in the step one a computer simulation for a provisionally adopted reaction kinetics model with provisionally assumed coefficients is made, from which as a result the second temperature curve ($f(T_{SYM},t)$) describing changes in the course of the curing reaction over time and the second curve of the degree of curing ($f(\alpha_{SYM},t)$) are obtained, which are plotted for a measuring point ($p_i$) adopted in the experiment, whereupon the first and second temperature curves are compared with one another, and if there is a nonconformity in their form, a step two is performed, in which the third curve of the degree of curing ($f(\alpha_{EXP},t)$) is plotted in such a way that the second curve of the degree of curing ($f(\alpha_{SYM},t)$) is compared to the first curve of the degree of curing ($f(\alpha_{ANAL},t)$), deviations occurring in their forms are determined and, depending on whether the second curve of the degree of curing ($\alpha_{SYM},t$) precedes or follows the first curve of the degree of curing ($f(\alpha_{ANAL},t)$), points lying on the second curve ($f(\alpha_{SYM},t)$) are moved on the chart by defined deviation values, which points after the movement form the third curve of the degree of curing ($f(\alpha_{EXP},t)$), after which, in a step three, the third curve of the degree of curing ($f(\alpha_{EXP},t)$) that has been plotted in this way is analytically transformed and for this curve new coefficients occurring in the adopted model of reaction kinetics are determined, and then for these new coefficients another computer simulation is made as in the step one and another temperature curve ($T_{SYM},t$) describing changes in temperature in the course of the curing reaction over time is plotted, which is compared with the temperature curve ($f(T_{EXP},t)$), the operations from the steps two and three being repeated until the assumed conformity between the forms of these functions is achieved, which conformity indicates that the proper coefficients of the multiparameter model of reaction kinetics for curing resin mixtures have been determined.

2. A method according to claim 1, **characterised in**

**that** the Kamal's model having the following form is adopted as the reaction kinetics model:

$$\frac{d\alpha}{dt} = \left(k_1 + k_2\alpha^m\right)\cdot\left(1-\alpha\right)^n ,$$

$$k_1 = A_1 e^{\frac{E_1}{RT}} ,$$

$$k_2 = A_2 e^{\frac{E_2}{RT}} ,$$

where:

$\alpha$ - degree of resin curing,
$d\alpha/dt$ - change in the degree of curing over time,
m,n - material constants,
$k_1$, $k_2$ - reaction rate constants,
$A_1$, $A_2$ - expotential coefficients [1/s],
$E_1$, $E_2$ - activation energies [J/kg],
R - universal gas constant [J/kgK],
T - absolute temperature [K].

**Patentansprüche**

1. Ein Verfahren zur Ermittlung der Koeffizienten eines Multiparametermodells der Reaktionskinetik von Harz-Aushärtungsmischungen, das in der Durchführung eines Experiments besteht, bei dem eine Aushärtung einer Harzmischung vorgenommen wird und bei dem auch bekannte Computermodellierungs- und Computersimulationstechniken genutzt werden, **dadurch gekennzeichnet, dass** im ersten Schritt die Temperatur der Aushärtungsreaktion während des Verlaufs des Experiments gemessen wird und eine erste Temperaturkurve ($f(T_{EXP},t)$) ausgedruckt wird, die danach analytisch in eine Kurve der Aushärtungsstufe ($f(\alpha_{ANAL},t)$) umgewandelt wird, und in diesem Schritt auch eine Computersimulation für das vorläufig angenommene Modell der kinetischen Reaktion mit vorläufig angenommenen Koeffizienten durchgeführt wird, aus welcher sich eine zweite Temperaturkurve ($f(T_{SYM},t)$), die die Temperaturänderungen im Verlauf der Aushärtungsreaktion beschreibt, und eine zweite Kurve der Aushärtungsstufe ($f(\alpha_{SYM},t)$) ergeben, wobei die beiden Kurven für einen zum Experiment angenommenen Messpunkt ($p_i$) ausgedruckt werden, woraufhin die erste und die zweite Temperaturkurve miteinander verglichen werden und wenn mangelnde Übereinstimmung in ihrer Form besteht, ein zweiter Schritt durchgeführt wird, bei dem die dritte Kurve der Aus-

härtungsstufe (f($\alpha_{EXP}$,t)) in der Weise hergestellt wird, dass die zweite Kurve der Aushärtungsstufe (f($\alpha_{SYM}$,t)) mit der ersten Kurve der Aushärtungsstufe (f($\alpha_{ANAL}$,t)) verglichen wird, die im Verlauf der Kurven auftretenden Abweichungen bestimmt werden und in Abhängigkeit davon, ob die zweite Kurve (f($\alpha_{SYM}$,t)) vor oder nach der ersten Kurve der Aushärtungsstufe (f($\alpha_{ANAL}$,t)) verläuft, die Punkte der zweiten Kurve (f($\alpha_{SYM}$,t)) entsprechend den festgestellten Abweichungen verschoben werden und die verschobenen Punkte dann die dritte Kurve der Aushärtungsstufe (f($\alpha_{EXP}$,t)) ergeben, wonach in einem dritten Schritt die so entstandene dritte Kurve der Aushärtungsstufe (f($\alpha_{EXP}$,t)) analytisch transformiert wird, für diese Kurve neue Koeffizienten für das Modell der kinetischen Reaktion definiert werden und dann für diese neuen Koeffizienten eine weitere Computersimulation wie im ersten Schritt durchgeführt und eine weitere Temperaturkurve (f($T_{SYM}$, t)) ausgedruckt wird, die die Temperaturänderungen im Verlauf der Aushärtungsreaktion über der Zeit beschreibt, die wiederum mit der Temperaturkurve (f($T_{EXP}$,t)) verglichen wird, wobei die Tätigkeiten des zweiten und dritten Schrittes so lange wiederholt werden, bis die vorausgesetzte Übereinstimmung in der Form dieser Funktionen erreicht ist, was bedeutet, dass die richtigen Koeffizienten des Multiparametermodells der Reaktionskinetik von Harz-Aushärtungsmischungen ermittelt wurden.

2. Ein Verfahren nach Anspruch 1, **dadurch gekennzeichnet, dass** als Modell für die Reaktionskinetik das Modell von Kamal in der untenstehenden Form angenommen wird:

$$\frac{d\alpha}{dt} = \left( k_1 + k_2 \alpha^m \right) \cdot \left( 1 - \alpha \right)^n \quad ,$$

$$k_1 = A_1 e^{\frac{E_1}{RT}} \quad ,$$

$$k_2 = A_2 e^{\frac{E_2}{RT}} \quad ,$$

wobei:

$\alpha$ - Aushärtungsstufe des Harzes,
$d\alpha/dt$ - Änderung der Aushärtungsstufe des Harzes über der Zeit,
m, n - Materialkonstanten,
$k_1$, $k_2$ - Reaktionsgrad-Konstanten,
$A_1$, $A_2$ - exponentielle Konstanten [1/s],
$E_1$, $E_2$ - Aktivierungsenergie [J/kg],
R - universelle Gaskonstante [J/kgK],
T - absolute Temperatur [K].

**Revendications**

1. Le procédé de détermination des coefficients d'un modèle à paramètres multiples de la cinétique réactionnelle pour la cuisson de mélanges à base de résine consistant à une expérience dans laquelle est effectuée une réaction de cuisson de mélange à base de résine et utilisant des techniques de modélisation et de simulation connues, **caractérisé en ce que**, en première étape, est mesurée la température de la réaction de cuisson ayant lieu pendant l'expérience, la première courbe de température /f($T_{EXP}$, t)/, qui est analytiquement transformée en première courbe de degré de cuisson /f($\alpha_{ANAL}$,t)/, est tracée, et en cette première étape, pour le modèle de la cinétique réactionnelle adopté provisoirement, avec des coefficients provisoirement admis, une simulation d'ordinateur est faite à l'issu de laquelle une deuxième courbe de température /f($T_{SYM}$,t)/, décrivant l'évolution de la température dans le temps lors de la réaction de cuisson, ainsi qu'une deuxième courbe de degré de cuisson /f($\alpha_{SYM}$,t)/ sont obtenues et elles sont tracées pour un point de mesure ($p_i$) adopté pour l'expérience, après quoi les courbes de température première et deuxième sont comparées et si la non-conformité de leur forme est avérée, l'étape deux est réalisée où une troisième courbe de degré de cuisson /f($\alpha_{EXP}$,t)/ est réalisée de cette façon que la deuxième courbe de degré de cuisson /f($\alpha_{SYM}$,t)/ est comparée à la première courbe de degré de cuisson /f($\alpha_{ANAL}$,t)/, des écarts se manifestant lors de leur déroulement sont déterminés et, selon si la deuxième courbe de cuisson /f($\alpha_{SYM}$,t)/ précède ou suit la première courbe de cuisson /f($\alpha_{ANAL}$,t)/ les points situés sur la deuxième courbe /f($\alpha_{SYM}$,t)/ sont transférés sur le diagramme en fonction des valeurs définies d'écart et ces nouveaux points, après leur transfert, créent une troisième courbe de degré de cuisson /f($\alpha_{EXP}$,t)/, étant entendue que cette troisième courbe de degré de cuisson /f($\alpha_{EXP}$,t)/ ainsi formée, à l'étape trois, est analytiquement transformée et les nouveaux coefficients se manifestant dans le modèle de la cinétique réactionnelle adopté sont déterminés pour cette nouvelle courbe, après quoi une simulation successive d'ordinateur est effectuée, pareille à celle de la première étape, et une courbe successive de température /f($T_{SYM}$,t)/ est tracée décrivant l'évolution de la température dans le temps lors de la réaction de cuisson et elle est comparée à la courbe de température /f($T_{EXP}$,t)/, les opérations de l'étape une et deux étant répétées jusqu'à ce que soit obtenue la conformité du déroulement de ces fonctions, ladite conformité indiquant en effet que les coefficients déterminés du modèle à paramètres multiples de la cinétique réactionnelle pour les mélanges à base de résine obtenus sont corrects.

2. Le procédé **caractérisé en ce que**, en tant que modèle de la cinétique réactionnelle, il admet le modèle Kamal sous forme :

$$\frac{d\alpha}{dt} = \left( k_1 + k_2 \alpha^m \right) \cdot \left( 1 - \alpha \right)^n ,$$

$$k_1 = A_1 e^{\frac{E_1}{RT}} ,$$

$$k_2 = A_2 e^{\frac{E_2}{RT}} ,$$

avec :

$\alpha$ - degré de cuisson de la résine,
$d\alpha/dt$ - évolution de degré de cuisson durant le temps,
m,n - constantes de matériaux,
$k_1$, $k_2$ - constantes de vitesse de réaction,
$A_1$, $A_2$ - coefficients expotentiels [1/s].
$E_1$, $E_2$ - énergies d'activation [J/kg],
R - constante universelle des gaz [J/kgK],
T - température absolue [K].

Fig.1

Fig. 2

Fig. 3

Fig. 4

**REFERENCES CITED IN THE DESCRIPTION**

**Patent documents cited in the description**

- US 6679626 B

- US 5453226 A